# EUROPÄISCHE PATENTSCHRIFT

(11) **EP 1 063 452 B1**
(45) Veröffentlichungstag und Bekanntmachung des Hinweises auf die Patenterteilung: **18.09.2002**
(21) Anmeldenummer: 99112299.5
(22) Anmeldetag: 26.06.1999
(51) Int. Cl.: F16H 61/02

(54) **Handschaltventil für ein automatisches Getriebe von Kraftfahrzeugen**
Manual valve for an automatic transmission for vehicles
Valve manuelle pour une transmission automatique de véhicules

(43) Veröffentlichungstag der Anmeldung: 27.12.2000
(73) Patentinhaber: Ford Global Technologies, Inc., A subsidiary of Ford Motor Company, Dearborn, Michigan 48126 (US)
(72) Erfinder: Kohl, Ernst, 50968 Köln (DE)
(74) Vertreter: Drömer, Hans-Carsten, Dipl.-Ing.

(56) Entgegenhaltungen:
- EP-A- 0 058 407
- DE-A- 1 555 388
- FR-A- 2 436 295
- GB-A- 2 200 959
- US-A- 5 634 864

## Beschreibung

Die Erfindung bezieht sich auf ein Handschaltventil für ein automatisches Getriebe von Kraftfahrzeugen, der im Oberbegriff der Patentansprüche 1 erläuterten Art.

Aus der DE 20 26 087 B2 ist eine Schaltvorrichtung für ein selbsttätig umschaltendes Kraftfahrzeugwechselgetriebe bekannt, bei dem ein von einem Wählhebel betätigbares gattungsgemäßes Handschaltventil in die für ein automatisches Getriebe eines Kraftfahrzeuges üblichen Betriebsstellungen P, R, N, D1, D2 und L verschiebbar ist, um das an einem Druckmittel-Einlaß anstehende Druckmittel entsprechend auf die Druckmittel-Auslässe gemäß dem gewählten Betriebsbereich zu verteilen.

Bei solchen bekannten Handschaltventilen für automatische Getriebe von Kraftfahrzeugen werden hierbei in den Betriebsstellungen P und N die Druckmittel-Auslässe normalerweise entlüftet. In P wird auch der Druckmittel-Einlaß IN entlüftet.

Aus der DE 196 09 787 A1 ist eine Hydrauliknotsteuerung für ein stufenloses Umschlingungsgetriebe mit erweitertem Handschaltventil bekannt.

Bei diesem bekannten Handschaltventil sind wieder die verschiedenen Betriebsstellungen zugeordneten Stellungen P, R, N, D und D1 zugeordnet und entsprechende Druckmittel-Auslässe sind zumindest einer hydraulisch betätigten Kupplung für Vorwärtsfahrt bzw. Rückwärtsfahrt zugeordnet.

Bei solchen für stufenlose Umschlingungsgetriebe mit hydraulisch gesteuerten Anfahrkupplungen eingesetzten Handschaltventilen wurde beobachtet, daß die z.B. während einer Betriebsstellung in P nicht mit Druckmittel beaufschlagten hydraulischen Leitungen zu den Kupplungen für den Vorwärts- und Rückwärtsgang durch die übliche Entlüftung über das Handschaltventil eine erhebliche Menge an Druckmittel verloren, das im Zuge der nächsten Schaltung in diese Gänge ersetzt werden mußte, wodurch es zu einer Anlegeverzögerung und unter Umständen zu unerwünschten Einrückstössen kam.

Während diese Situation in den Leitungen zwischen dem Handschaltventil und den beiden Kupplungen durch bessere Ausführung der Kolbendichtungen und besondere Ausführung der Entlüftungslöcher in den Kolben der Kupplungen (mit Rückschlagventilen) verbessert werden kann, ist dies für die Schaltstellung P in der Verbindungsleitung zwischendem den Kupplungsdruck erzeugenden Kupplungsventil und dem Handschaltventil nicht möglich.

Die Aufgabe der Erfindung ist es, ein Handschaltventil für ein automatisches Getriebe von Kraftfahrzeugen der im Oberbegriff des Patentanspruches 1 erläuterten Art derart zu verbessern, daß ein unerwünschter Druckmittelverlust vom Kupplungsventil zum Handschaltventil und damit zu den hydraulischen Kupplungen vermieden wird und dementsprechend ein beschleunigtes Umschalten von der Betriebsstellung P zum Rückwärtsgang oder zum Vorwärtsgang ohne störende Anlegeverzögerung und ohne störende Einrückstösse ermöglicht wird.

Gemäß der Erfindung wird diese Aufgabe gelöst, indem ein Handschaltventil für ein automatisches Getriebe von Kraftfahrzeugen, der im Oberbegriff des Patentanspruches 1 erläuterten Art die im Kennzeichenteil des Patentanspruches 1 aufgezeigten Merkmale aufweist.

Dadurch, daß das Ventilelement an seinem die Stellungen D und L kontrollierenden Ende mit einem verlängerten Steuerbund versehen ist, der zwei radiale Bohrungen mit einer axialen Verbindungsbohrung und einen Absatz aufweist, derart, daß in Stellung P der verlängerte Steuerbund den Druckmittel-Einlaß sperrt, wobei die zweite radiale Bohrung auch von der Ventilbohrung gesperrt ist, so daß beim Stand des Kraftfahrzeuges ein Leerlaufen der Leitung zwischen Kupplungsventil und Handschaltventil durch Entlüften über den bei ruhendem Motor drucklosen Druckmittel-Einlaß vermieden wird, bei Stellung R der Druckmittel-Auslaß D über die zweite radiale Bohrung und den Absatz entlüftet ist, in der Stellung N die Druckmittel-Auslässe D und L durch die drei Bohrungen und den Absatz entlüftet sind, in Stellung D der Druckmittel-Auslaß L über die drei Bohrungen entlüftet ist und in Stellung L der verlängerte Steuerbund keine Einwirkung auf den Druckmittelaufbau hat, wird ein Entlüften dieses Kanals verhindert.

Damit wird insbesondere beim Stillstand des Kraftfahrzeuges und ruhender Brennkraftmaschine bei der am Druckmittel-Einlaß IN kein Druckmittel ansteht sondern eine Entlüftungsmöglichkeit gegeben ist, diese unterbunden und dadurch wird verhindert, daß die von einem vorhergehenden Betrieb unter Druckmittelbeaufschlagung weitgehend gefüllte hydraulische Leitung zwischen Kupplungs- und Handschaltventil leerläuft.

Damit kann bei einem Neustart des Kraftfahrzeuges die ansonsten zum Befüllen dieser Leitung erforderliche Anlegeverzögerung und der nach dem Verdrängen der eingeschlossenen Luft oft auftretende Einrückstoß vermieden werden.

Die Erfindung wird anhand zweier Ausführungsbeispiele näher erläutert. Es zeigt:
- Fig. 1: ein Handschaltventil gemäß der Erfindung jeweils in den unterschiedlichen Stellungen P, R, N, D und L und
- Fig. 2: das bisherige Handschaltventil ebenfalls in den entsprechenden Stellungen für die verschiedenen Betriebsbereiche.

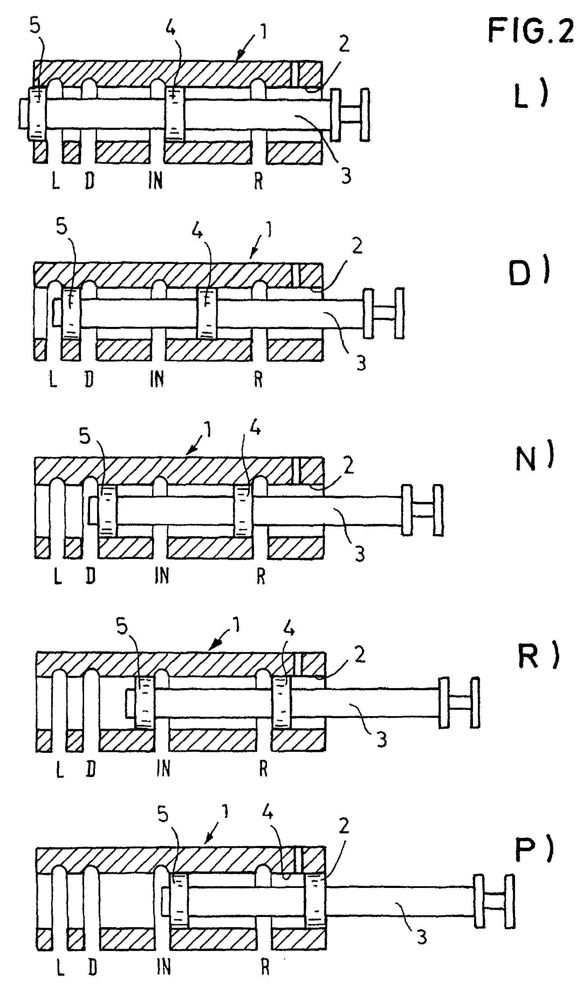

Das in Fig. 2 gezeigte herkömmliche Handschaltventil ist in der Zeichnung schematisch dargestellt und besteht im wesentlichen aus einem Ventilkörper 1 mit einer Ventilbohrung 2 und einem Ventilelement 3 mit zwei Steuerbünden 4 und 5.

Die verschiedenen Druckmittel-Ein- und -auslässe sind der einfachheitshalber mit den für den jeweiligen Betriebsbereich zutreffenden Buchstaben gekennzeichnet.

Der Druckmittel-Einlaß ist mit IN bezeichnet, während die Druckmittel-Auslässe für die verschiedenen Betriebsbereiche R, D und L bezeichnet sind.

Wie sich aus einer Betrachtung der übereinander dargestellten verschiedenen Stellungen des Ventilelementes 3 in seiner Ventilbohrung 2 ergibt, sind jeweils dann, wenn ein bestimmter Druckmittel-Auslaß beaufschlagt ist, die übrigen Druckmittel-Auslässe entlüftet. Dies gilt insbesondere für die Stellung P, die normalerweise während des Ruhezustandes des Fahrzeuges eingestellt werden muß.

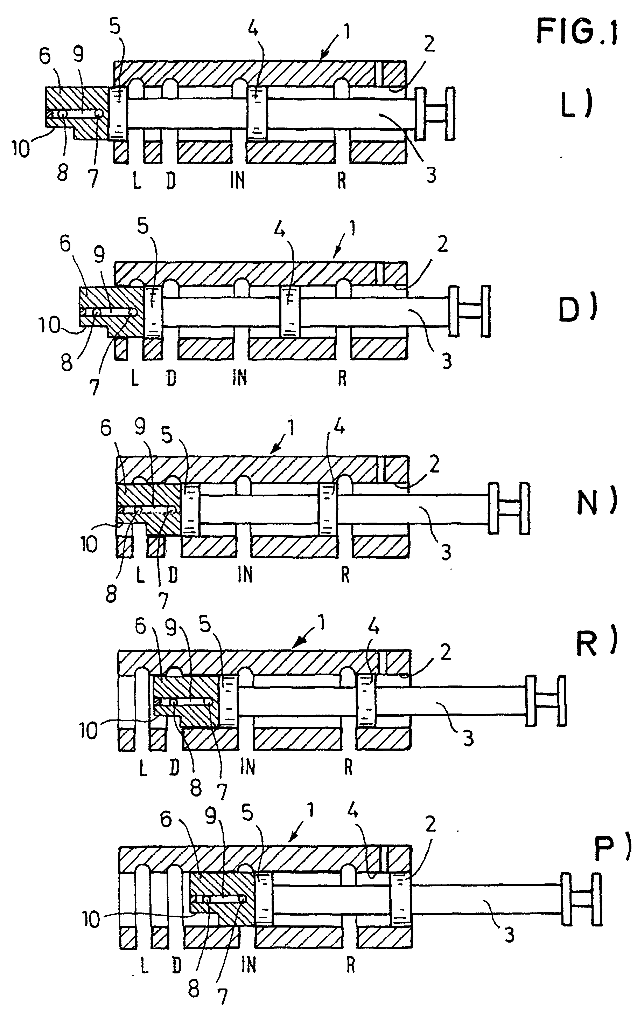

Wie aus Fig. 1 in der Darstellung in der Stellung P ersichtlich, ist gemäß der Erfindung das Ventilelement 3 mit einem verlängerten Steuerbund 6 mit 2 radialen Bohrungen 7 und 8 und einer nach außen hin verschlossenen axialen Bohrung 9 versehen sowie mit einem Absatz 10.

Wie sich aus einer Betrachtung der in den verschiedenen Betriebsstellungen, P, R, N, D und L gezeigten Ventilelement 3 in seiner Ventilbohrung 2 ergibt, führt der verlängerte Steuerbund 6 zu folgenden Funktionsänderungen:

In der Stellung P deckt der verlängerte Steuerbund 6 sowohl den Druckmittel-Einlaß IN ab und erlaubt keine Entlüftung dadurch, daß die zweite radiale Bohrung 8 noch im Bereich der Ventilbohrung 2 abgedeckt ist. Damit ist ein Entlüften der DruckmittelZuleitung vom Kupplungs- zum Handschaltventil unterbunden.

In der Stellung R wird der Druckmittel-Auslaß R mit Druckmittel beaufschlagt und der Druckmittel-Auslaß D wird entlüftet.

In der Stellung N sind sowohl der Druckmittel-Auslaß D als auch der Druckmittel-Auslaß L über die drei Bohrungen 7, 8 und 9 entlüftet und der Druckmittel-Einlaß IN durch die Ventilbünde 4 und 5 abgeriegelt.

In der Stellung D ist der Druckmittel-Auslaß L über die drei Bohrungen entlüftet und in der Stellung L ist der verlängerte Steuerbund 6 völlig ohne Wirkung.

## Patentansprüche

1. Handschaltventil für ein automatisches Getriebe von Kraftfahrzeugen, mit einem in einer Ventilbohrung (2) verschiebbaren Ventilelement (3), das über einen Wählhebel betätigbar ist, wobei in der Ventilbohrung (2) ein Druckmittel-Einlaß (IN) und mehrere Druckmittel-Auslässe (R, D und L) angeordnet sind und das Ventilelement (3) mehrere Steuerbünde (4 und 5) aufweist, über die es in verschiedenen Betriebsstellungen (P, R, N, D und L) das am Druckmittel-Einlaß (IN) anstehende Druckmittel auf die verschiedenen Druckmittel-Auslässe (R, D und L) verteilt bzw. diese entlüftet,
**dadurch gekennzeichnet, daß**
- das Ventilelement (3) im Ventilgehäuse (1) benachbart dem Steuerbund (5) an seinem die Stellungen (D) und (L) kontrollierenden Ende mit einem verlängerten Steuerbund (6) versehen ist, der zwei radiale Bohrungen (7 und 8) und eine diese verbindende axiale Bohrung (9) sowie einen Absatz (10) aufweist, derart, daß in Stellung (P) der verlängerte Steuerbund (6) den Druckmittel-Einlaß (IN), der bei ruhendem Motor drucklos ist, sperrt, wobei die zweite radiale Bohrung (8) auch von der Ventilbohrung (2) gesperrt ist, so daß beim Stand des Kraftfahrzeuges ein Leerlaufen der Leitungen zwischen Kupplungsventil und Handschaltventil durch Entlüften über den bei ruhendem Motor drucklosen Druckmittel- Einlaß (IN) vermieden wird, bei Stellung (R) der Druckmittel - Auslaß (D) über die zweite radiale Bohrung (8) und den Absatz (10) entlüftet ist, in der Stellung (N) die Druckmittel - Auslässe (D) und (L) durch die drei Bohrungen (7,8,9) und den Absatz (10) entlüftet sind, in Stellung (D) der Druckmittel - Auslaß (L) über die drei Bohrungen (7,8,9) entlüftet ist und in Stellung (L) der verlängerte Steuerbund (6) keine Einwirkung auf den Druckmittelaufbau hat.

## Claims

1. Manual shift valve for an automatic transmission of motor vehicles, with a valve element (3) which is displaceable in a valve bore (2) and which can be actuated via a selector lever, a pressure-medium inlet (IN) and a plurality of pressure-medium outlets (R, D and L) being arranged in the valve bore (2), and the valve element (3) having a plurality of control collars (4 and 5), via which, in various operating positions (P, R, N, D and L), it distributes the pressure medium present at the pressure-medium inlet (IN) to the various pressure-medium outlets (R, D and L) or bleeds the latter,
**characterized in that**
- the valve element (3), at its end controlling the positions (D) and (L), is provided in the valve housing (1), adjacently to the control collar (5), with an extended control collar (6) which has two radial bores (7 and 8) and an axial bore (9) connecting these and also a step (10), in such a way that, in position (P), the extended control collar (6) shuts off the pressure-medium inlet (IN) which is pressureless when the engine is stationary, the second radial bore (8) also being shut off by the valve bore (2), so that, when the motor vehicle is at a standstill, an emptying of the lines between the clutch valve and the manual shift valve due to bleeding via the pressure-medium inlet (IN), which is pressureless when the engine is stationary, is avoided, in position (R) the pressure-medium outlet (D) is bled via the second radial bore (8) and the step (10), in position (N) the pressure-medium outlets (D) and (L) are bled by means of the three bores (7, 8, 9) and the step (10), in position (D) the pressure-medium outlet (L) is bled via the three bores (7, 8, 9), and in position (L) the lengthened control collar (6) has no effect on the pressure-medium build-up.

## Revendications

1. Valve manuelle pour une transmission automatique de véhicules automobiles, comprenant un élément de valve (3) déplaçable dans un alésage de valve (2), qui est actionnable par un levier de sélection, une entrée de fluide sous pression (IN) et plusieurs sorties de fluide sous pression (R, D et L) étant disposées dans l'alésage de valve (2) et l'élément de valve (3) présentant plusieurs épaulements de commande (4 et 5) par le biais desquels il répartit le fluide sous pression présent dans les diverses positions de fonctionnement (P, R, N, D et L) au niveau de l'entrée de fluide sous pression (IN) sur les diverses sorties de fluide sous pression (R, D et L) ou purge celui-ci,
**caractérisée en ce que**
- l'élément de valve (3) est pourvu, dans le logement de valve (1) à proximité de l'épaulement de commande (5) sur son extrémité contrôlant les positions (D) et (L), d'un épaulement de commande (6) prolongé qui présente deux alésages radiaux (7 et 8) et un alésage axial (9) reliant ceux-ci ainsi qu'un retrait (10), de telle sorte que dans la position (P), l'épaulement de commande (6) prolongé bloque l'entrée du fluide sous pression (IN) qui est sans pression lorsque le moteur est au repos, le deuxième alésage radial (8) étant également bloqué par l'alésage de valve (2), de sorte qu'à l'arrêt du véhicule automobile, une marche à vide des conduites entre la valve d'accouplement et la valve manuelle soit évitée par une purge par l'entré de fluide sous pression (IN) sans pression lorsque le moteur est au repos, dans la position (R) la sortie de fluide de pression (D) soit purgée par le deuxième alésage radial (8) et le retrait (10), dans la position (N), les sorties de fluide sous pression (D) et (L) soient purgées par les trois alésages (7, 8, 9) et le retrait (10), dans la position (D), la sortie de fluide sous pression (L) soit purgée par les trois alésages (7, 8, 9) et dans la position (L) l'épaulement de commande (6) prolongé n'ait aucune influence sur l'accumulation du fluide sous pression.
